# NEW EUROPEAN PATENT SPECIFICATION

(11) **EP 0 282 967 B2**
(45) Date of publication and mention of the opposition decision: **17.03.2004**
(45) Mention of the grant of the patent: 01.06.1994
(21) Application number: 88104077.8
(22) Date of filing: 15.03.1988
(51) Int. Cl.: G01R 33/00

(54) **Sensor for detecting variation in magnetic field**
Sensor zur Feststellung von einer Änderung im magnetischen Feld
Capteur pour la détection d'une variation à un champ magnétique

(30) Priority: 18.03.1987 JP 6516587; 19.03.1987 JP 6668587; 24.03.1987 JP 6977187; 30.04.1987 JP 10753087; 15.06.1987 JP 9180087
(43) Date of publication of application: 21.09.1988
(73) Proprietor: SUMITOMO ELECTRIC INDUSTRIES, LTD., Osaka-shi, Osaka 541 (JP)
(72) Inventor: Saito, Hidetoshi C/o Itami Works of Sumitomo, Itami-shi Hyogo.ken (JP); Kume, Masahiro C/o Itami Works of Sumitomo, Itami-shi Hyogo.ken (JP); Mizuno, Kazuo C/o Osaka Works of Sumitomo, Konohana-ku Osaka (JP)
(74) Representative: GROSSE BOCKHORNI SCHUMACHER

(56) References cited:
- EP-A- 206 879
- DE-A- 2 154 847
- DE-A- 3 205 907
- DE-A- 3 447 312
- DE-A- 3 530 288
- DE-B- 2 111 499
- US-A- 4 289 722
- US-A- 4 463 312
- Römpps Chemie-Lexikon, 8th Edition, page 4229
- Kunststoff-Lexikon, Carl Hanser Verlag, Munich, Vienna, 1992, Dr. Stoeckhert
- Römpps Chemie-Lexikon, 7th Edition, pages 918, 3563 and 3564

## Description

The present invention relates to a sensor for detecting variation in magnetic field, and more particularly, it relates to a sensor for an automobile etc., which requires sealing performance against external environment.

In general, various sensors such as a rotation sensor, a temperature sensor, a pressure sensor, an acceleration sensor and the like are known as those employed for an automobile or the like. In particular, rust resistance against brine or the like, vibration resistance, shock resistance, water tightness and the like are required for a rotation sensor for detecting the wheel speed etc. mounted in a tire house, for example, which is directly exposed to external environment.

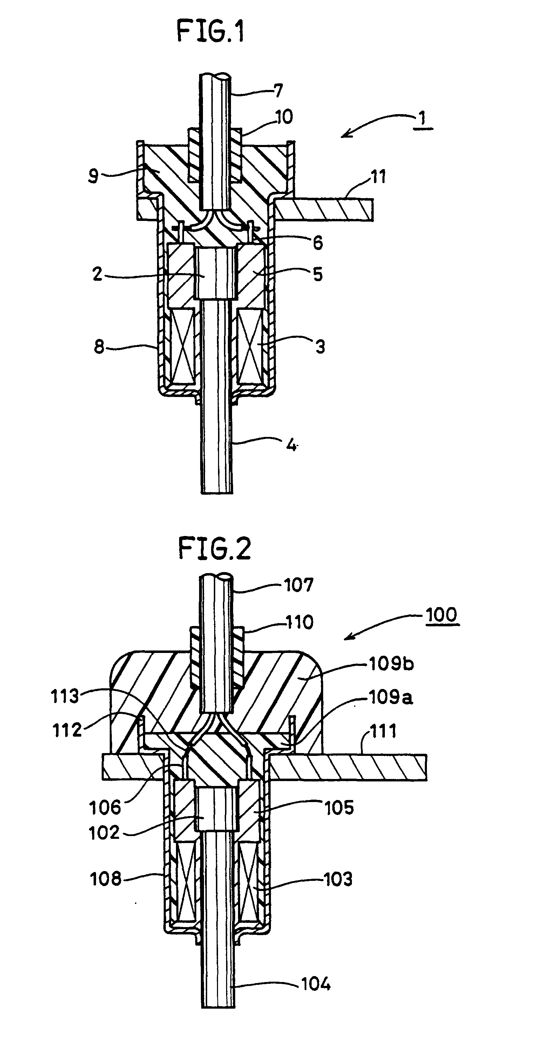

Fig. 1 is a sectional.view showing an example of a conventional rotation sensor 1. In the rotation sensor 1 as shown in Fig. 1, a sensor element part formed by a magnet 2, a coil 3, a magnetic pole 4 and a bobbin 5 is contained in a case 8. Terminals 6 are provided on both ends of a winding wound on the coil 3, to be connected to an end of an output wire 7. A resin part 9 is formed within the case 8 through resin molding. An output wire protective member 10 is provided around a part of the output wire 7 located in an opening portion of the case 8. Thus, the output wire 7 is covered by the resin part 9 through the output wire protective member 10 in this portion. A bracket 11 is mounted on the outer side of the case 8, to fix the rotation sensor 1 to a prescribed position.

The resin part 9 is generally prepared by thermosetting resin such as epoxy resin.

In the conventional rotation sensor as hereinabove described, resin is molded in the case to fix the sensor element part provided in the case and the output wire connected thereto, as well as to maintain water/air tightness of the case. However, such a conventional rotation sensor is not necessarily sufficient in water/air tightness. More reliable structure of higher water/air tightness is required particularly for a sensor for an automobile etc., which is employed for a long time under severe environment. Such a sensor for an automobile further requires improvement in mechanical strength such as shock resistance, since the same is subjected to extreme vibration.

DE-A-2154847 discloses an inductive sensor according to the preamble of claim 1. In this sensor, the output wires are fixed by a filling resin which partly covers the output wires connecting a coil of the sensor to plug pins.

DE-A-3530288 also discloses an inductive sensor comprising channels formed in a resin on top of a coil. The channels serve as clearances for conductors which connect the coil to a wire cable. The junction of the conductors and the wire cable is provided in a clearance.

In view of the state of art, it is an object of the invention to provide a sensor which is improved in water/air tightness, vibration resistance and shock resistance.

According to the present invention, this object is achieved with a sensor according to claim 1.

Further preferred embodiments are claimed in the sub-claims.

Further, mechanical strength can be improved since the second resin part may be prepared by resin which is particularly excellent in shock resistance.

In addition, the second resin part can be molded without damaging,the sensor element, which is covered by the first resin part. Thus, assembling steps can be simplified to produce stabilized products.

In a preferred embodiment of the present invention, a connecting portion between the terminal of the sensor element part and the output wire is covered by the first resin part. Preferably, the thermosetting resin is epoxy resin and the thermoplastic resin is polyamide resin such as nylon resin.

According to such an embodiment, the connecting portion between the sensor element part and the output wire is' not degraded or damaged even if the second resin part is molded in the case opening portion under high temperatureihigh pressure conditions, since the said connecting portion is covered and protected by the first resin part. Thus, the second resin part can be molded under higher temperature/higher pressure conditions, to more tightly seal clearances between the second resin part and the case and between the same and the output wire.

Further, the second resin part is formed by a material which is different from that for the first resin part. Thus, the second resin part can be prepared by resin of high mechanical strength such as fiberglass reinforced nylon resin.

In another preferred embodiment of the present invention, the connecting portion between the terminal of the sensor element part and the output wire is covered by the second resin part.

In such an embodiment, the first resin part covers only a lower part of the terminal of the sensor element part, whereby an upper portion of the terminal is exposed after the first resin part is filled in the case. Therefore, the output wire can be easily connected to the upper portion of the terminal. Thus, it is not necessary to connect the output wire to the terminal immediately after formation of the first resin part, whereby the case can be easily handled to extremely improve workability and productivity.

In still another embodiment of the present invention, a junction resin part is further provided between the case, being filled up with the first resin part, and the second resin part. Preferably the case is formed by a metal while the junction resin part is prepared by thermoplastic resin, and more preferably, by urethane resin or polyamide resin in this case. Further, the second resin part is preferably prepared by polyamide resin.

In such an embodiment, sealing performance of the case is further improved since the junction resin part is provided between the case and the second resin part.

In a further embodiment of the present invention, a third resin part is further provided for covering a connecting portion between the output wire and the terminal of the sensor element part after the first resin part is filled in the case containing the sensor element part. Preferably the third resin part is prepared by thixotropic resin which is substantially identical in thermal expansion coefficient to that forming the first resin part. More preferably, the first and third resin parts are prepared by thermosetting resin and the second resin part is prepared by thermoplastic resin.

A sensor of such an embodiment may be manufactured by, for example, providing a magnet, a coil, a magnetic pole and a bobbin etc. in a case to form a sensor element part, connecting the sensor element part with an output wire by a terminal, filling up the case with a first resin part, covering the terminal by a third resin part and covering an opening portion of the case, the third resin part and the output wire by the second resin part.

According to such an embodiment, a connecting portion between the output wire and the terminal is prevented from disconnection even if the second resin part is molded under high temperature/high pressure conditions, since the said connecting portion is covered and protected by the third resin part. The third resin part is so prepared by thixotropic resin that no dripping of resin is caused in covering, thereby to improve productivity. Further, the third resin part is preferably prepared by resin having a relatively small thermal expansion coefficient which is identical or substantially identical to that of the first resin part, thereby to prevent the connecting portion between the output wire and the terminal from disconnection caused by thermal expansion.

In a further embodiment of the present invention, the case has a flange in the vicinity of its opening, while a bracket is mounted on the outer periphery of the case for fixing the sensor and an elastic ring is provided on an outer peripheral portion of the case between the bracket and the flange. In such an embodiment, the ring is held under pressure between the flange and the bracket, so that the portion between the flange and the bracket is covered by the second resin part upon molding thereof. In such an embodiment, the ring is preferably formed by rubber or resin. More preferably, a resin ring is molten to be adhered to the second resin part.

In such an embodiment, the elastic ring is fixed by the second resin part in a state being adhered to the flange and the bracket by its impact resilience. Therefore, even if a clearance is defined between the bracket and the case or between the bracket and the second resin part, no water infiltrates into the case since the clearance between the case and the bracket or between the case and a resin-molded portion is sealed by the elastic ring.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a sectional view showing a conventional rotation sensor;
Fig. 2 is a sectional view showing a rotation sensor according to a first embodiment of the present invention;
Fig. 3 is a sectional view showing a rotation sensor according to a second embodiment of the present invention;
Fig. 4 is a sectional view showing a magnetic sensor according to a third embodiment of the present invention;
Fig. 5 is a sectional view showing a rotation sensor according to a fourth embodiment of the present invention;
Fig. 6 is a sectional view showing a magnetic sensor according to a fifth embodiment of the present invention;
Fig. 7 is a sectional view showing a rotation sensor according to a sixth embodiment of the present invention;
Fig. 8 is a sectional view showing a rotation sensor according to a seventh embodiment of the present invention;
Fig. 9 is a sectional view showing a magnetic sensor according to an eighth embodiment of the present invention;
Fig. 10 is a sectional view showing a rotation sensor according to a ninth embodiment of the present invention;
Fig. 11 is a sectional view showing a magnetic sensor according to a tenth embodiment of the present invention;
Fig. 12 is a sectional view showing a rotation sensor according to an eleventh embodiment of the present invention;
Fig. 13 is a sectional view showing a magnetic sensor according to a twelfth embodiment of the present invention;

Fig. 2 is a sectional view showing a rotation sensor 100 according to a first embodiment of the present invention. The rotation sensor 100 as shown in Fig. 2 has a magnet 102 and a magnetic pole 104 mounted on the same, which are provided in a bobbin 105. A coil 103 is provided around the bobbin 105. Terminals 106 are mounted on both end portions of a winding of the coil 103. The magnet 102, the coil 103, the magnetic pole 104 and the bobbin 105 form a sensor element part, which is contained in a case 108. Forward end portions 113 of an output wire 107 are connected to the terminals 106 of the sensor element part. A first resin part 109a is filled in the case 108, to cover connecting portions between the terminals 106 of the sensor element part and the output wire 107. The first resin part 109a is prepared by epoxy resin having a low thermal expansion coefficient.

A bracket 111 is provided around the case 108, for fixing the rotation sensor 100 to a prescribed position. A second resin part 109b is formed in an opening portion 112 of the case 108 by molding. An output wire protective member 110 is provided around a portion of the output wire 107 being close to its end. The second resin part 109b is adapted to entirely cover the opening portion 112 of the case 108, thereby to seal a clearance between the case 108 and the first resin part 109a. The second resin part 109b is prepared by fiberglass reinforced nylon resin. The output wire protective member 110 is prepared by urethane resin, and the case 108 is prepared by stainless steel of SUS304.

In this embodiment, the second resin part 109b is so molded in the vicinity of the opening portion 112 as to seal the clearance between the first resin part 109a and the case 108, thereby to improve water/air tightness of the rotation sensor 100. Further, the sensor element part is not damaged in formation of the second resin part 109b, since the sensor element part is already covered and protected by the first resin part 109a.

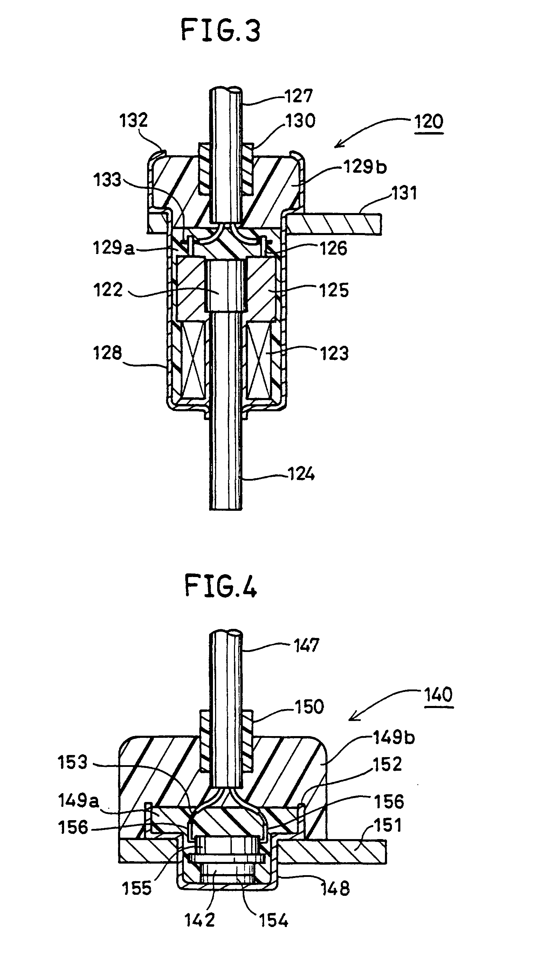

Fig. 3 is a sectional view showing a rotation sensor 120 according to a second embodiment of the present invention. In the rotation sensor 120 as shown in Fig. 3, a magnet 122, a coil 123, a magnetic pole 124 and a bobbin 125 form a sensor element part, which is contained in a case 128. The case 128 is filled up with a first resin part 129a by molding. The first resin part 129a is adapted to cover connecting portions between forward end portions 133 of an output wire 127 and terminals 126 of the sensor element part. In this embodiment, a second resin part 129b is provided in the case 128 by molding. Further, an end of an opening portion 132 of the case 128 is inwardly caulked along an end surface of the second resin part 129b. Also in such structure, a clearance between the case 128 and the first resin part 129a can be sealed by the second resin part 129b. Further, a clearance between the second resin part 129b and the output wire 127 can be sealed through an output wire protective member 130. A bracket 131 is provided around the outer periphery of the case 128.

Fig. 4 is a sectional view showing a magnetic sensor 140 according to a third embodiment of the present invention. In the magnetic sensor 140 as shown in Fig. 4, a magnet 142 is provided in a case 148, and a magnetic resistance element 154 is mounted on one side of the magnet 142. The magnetic resistance element 154 is in contact with the inner surface of the case 148. An electric circuit part 155 is provided on another side of the magnet 142, and terminals 156 are mounted on the electric circuit part 155. Forward end portions 153 of an output wire 147 are connected to the terminals 156. The magnet 142, the magnetic resistance element 154, the electric circuit part 155 and the terminals 156 thereof form a sensor element part, which is contained in the case 148 to be covered by a first resin part 149a. A bracket 151 is mounted around the outer side of the case 148.

A second resin part 149b is formed by molding to cover an opening portion 152 of the case 148. A clearance between the case 148 and the first resin part 149a is sealed by the second resin part 149b. Further, a clearance between the output wire 147 and the second resin part 149b is also sealed through an output wire protective member 150.

Preferably the first resin part 149a is prepared by thermosetting resin in view of electric characteristics etc. and the second resin part 149b is prepared by thermoplastic resin in view of molding workability etc.

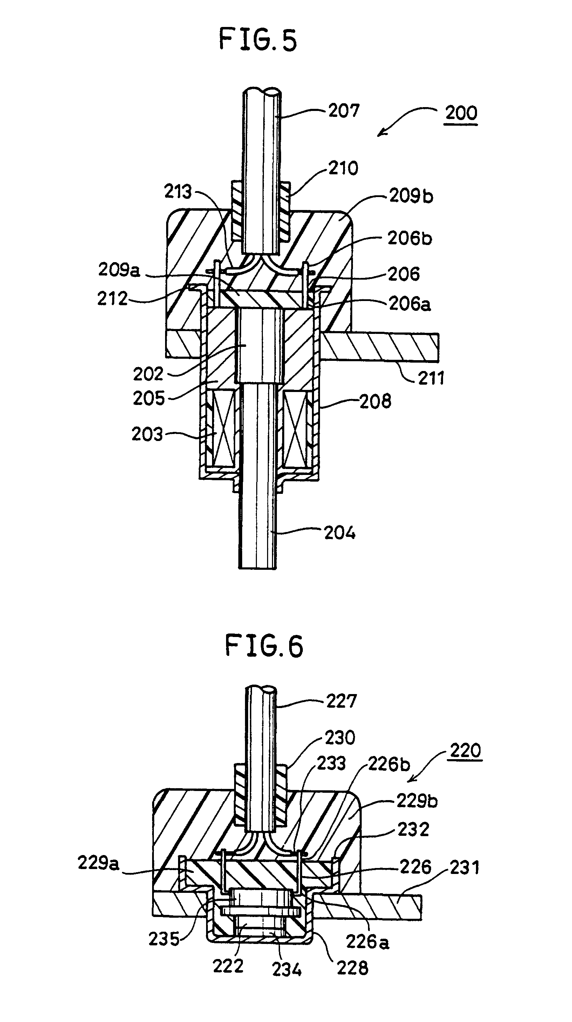

Fig. 5 is a sectional view showing a rotation sensor 200 according to a fourth embodiment of the present invention. In the rotation sensor 200 as shown in Fig. 5, a magnet 202, a coil 203, a magnetic pole 204 and a bobbin 205 etc. form a sensor element part, which is contained in a case 208. The case 208 is filled up with a first resin part 209a by molding up to a portion close to an opening portion 212. Both ends of a wire wound on the coil 203 are soldered to lower portions 206a of terminals 206, which lower portions 206a are covered by the first resin part 209a.

A bracket 211 for fixing the rotation sensor 200 is joined to the outer side of the case 208 by brazing. Forward end portions 213 of an output wire 207 are caulked/joined to upper portions 206b of the terminals 206. A pipe-shaped output wire protective member 210 is provided around a portion of the output wire 207 being close to the forward end portions 213.

An opening portion 212 of the case 208 is covered by a second resin part 209b, which also covers the upper portions 206b of the terminals 206. The second resin part 209b is molded under high temperature/high pressure conditions, whereby the case opening portion 212, the output wire protective member 210 and a side of the bracket 211 being close to the output wire 207 are adhered to the second resin part 209b respectively.

In this embodiment, the first resin part 209a is prepared by epoxy resin and the second resin part 209b is prepared by fiberglass reinforced nylon resin. Further, the output wire protective member 210 is prepared by urethane resin and the case 208 is prepared by stainless steel of SUS304.

Fig. 6 is a sectional view showing a magnetic sensor 220 according to a fifth embodiment of the present invention. The magnetic sensor 220 as shown in Fig. 6 has a magnetic resistance element 234 which is in contact with the bottom surface of a case 228 and a magnet 222 provided on the magnetic resistance element 234. An electric circuit part 235 is provided above the magnet 222. The electric circuit part 235 is provided with a pair of terminals 226 having lower portions 226a connected thereto. The magnet 222, the magnetic resistance element 234 and the electric circuit part 235 etc. form a sensor element part being contained in a case 228, which is filled up with a first resin part 229a by molding. The lower portions 226a of the terminals 226, serving as connecting portions with the sensor element part, are also covered by the first resin part 229a.

Forward end portions 233 of an output wire 227 are connected to upper portions 226b of the terminals 226. An opening portion 232 of the case 228 is covered by a second resin part 229b, which also covers the upper portions 226b of the terminals 226. The second resin part 229b is molded under high temperature/high pressure conditions, whereby the case opening portion 232, the output wire protective member 230 and a surface of the bracket 231 being close to the output wire 227 are adhered to the second resin part 229b.

The first resin part 229a, the second resin part 229b, the case 228 and the output wire protective member 230 are identical in material to those in the embodiment as shown in Fig. 5.

In each of the embodiments as shown in Figs. 5 and 6, the output wire can be connected to the upper portions of the terminals after the case is filled up with the first resin part since the first resin part covers only the lower portions of the terminals. Thus, the output wire is not yet connected to the sensor element part immediately after formation of the first resin part, which can be easily handled in operation to extremely improve productivity.

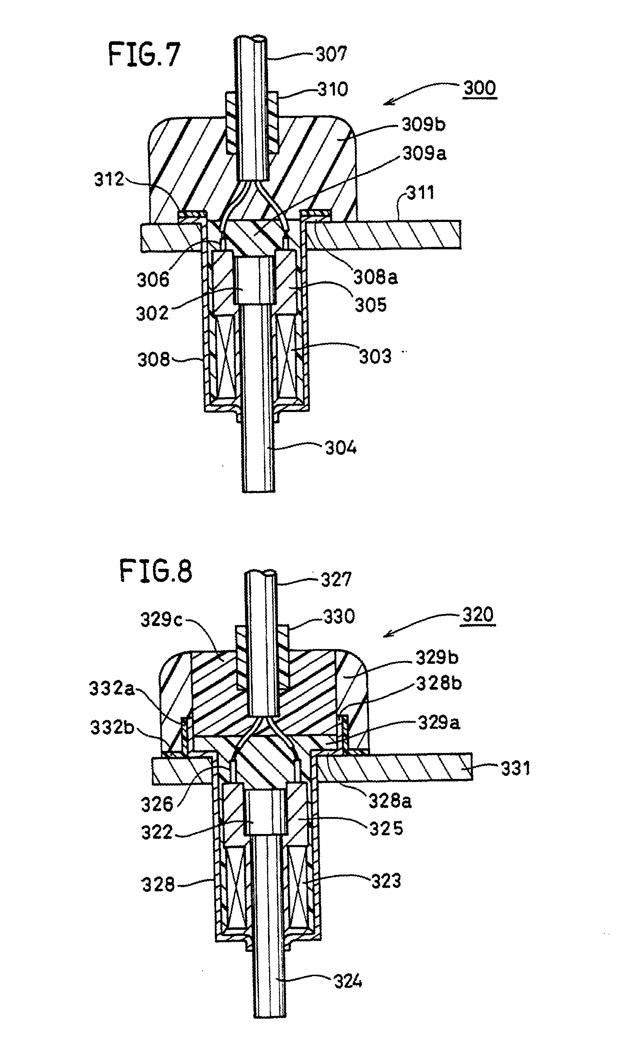

Fig. 7 is a sectional view showing a rotation sensor 300 according to a sixth embodiment of the present invention. In the rotation sensor 300 as shown in Fig. 7, a magnet 302, a coil 303, a magnetic pole 304 and a bobbin 305 form a sensor element part, which is contained in a case 308. Resin is filled in the case 308, to form a first resin part 309a. The sensor element part is fixed in the case 308 by the first resin part 309a. An end portion of the magnetic pole 304, serving as a detecting part, is adapted to outwardly project from the case 308. A flange 308a is formed in an end portion of the case 308 being close to its opening portion. A bracket 311 for fixing the rotation sensor 300 to a prescribed position is mounted on an outer peripheral part of the case 308, to be in contact with the flange 308a.

Terminals 306 are provided on both ends of a winding wound on the coil 303, to be connected with end portions of lead wires extending from an output wire 307. A pipe-shaped output wire protective member 310 is provided in the vicinity of a side end of the output wire 307.

A second resin part 309b is formed to cover an opening portion of the case 308, and a junction resin part 312 is formed between the second resin part 309b and the flange 308a.

In this embodiment, the first resin part 309a is prepared by epoxy resin and the second resin part 309b is prepared by fiberglass reinforced nylon resin. The junction resin part 312 is prepared by urethane resin, and the case 308 is prepared by stainless steel of SUS304. The junction resin part 312 is provided on the flange 308a of the case 308 in advance to molding of the second resin part 309b. The junction resin part 312 is half-molten by heat and pressure for molding the second resin part 309b, to be adhered to the flange 308a and the second resin part 309b. The surface of the junction resin part 312 may be irregularized before molding of the second resin part 309b, to further improve adhesion thereof.

Fig. 8 is a sectional view showing a rotation sensor 320 according to a seventh embodiment of the present invention. In the rotation sensor 320 as shown in Fig. 8, a sensor element part formed by a magnet 322, a coil 323, a magnetic pole 324 and a bobbin 325 is contained in a case 328. Resin is filled in the case 328, to form a first resin part 329a. The sensor element part is fixed in the case 328 by the first resin part 329a. An end of the magnetic pole 324 is adapted to outwardly project from the case 328. The case 328 is provided in its opening end portion with a flange 328a and a cylindrical portion 328b extending toward an output wire 327 from the flange 328a. In this embodiment, junction resin parts 332a and 332b are provided around the outer periphery of the cylindrical portion 328b and on the surface of a bracket 331 respectively. Connecting portions between lead wires of the output wire 327 and terminals 326 are embedded in the first resin part 329a, while the output wire 327 and an output wire protective member 330 are partially embedded in a second resin part 329c. Another second resin part 329b is formed around the second resin part 329c. In this embodiment, a second resin member is divided into two second resin parts 329b and 329c.

The junction resin part 332a provided around the outer periphery of the cylindrical portion 328b is prepared by polyamide resin, while the junction resin part 332b provided on the surface of the bracket 331 is prepared by urethane resin.

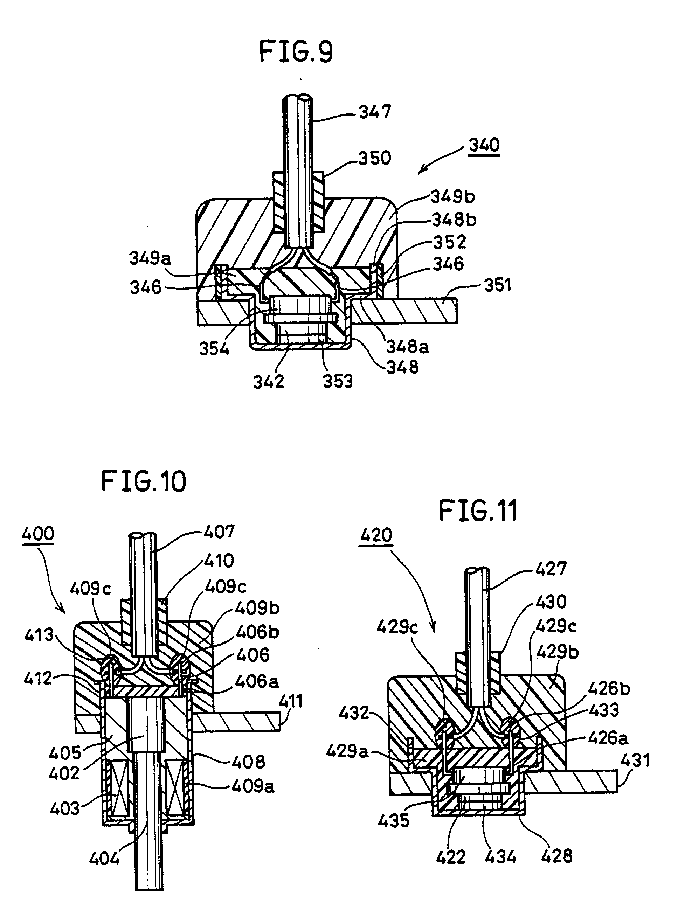

Fig. 9 is a sectional view showing a magnetic sensor 340 according to an eighth embodiment of the present invention. In the magnetic sensor 340 as shown in Fig. 9, a magnet 342 is provided in a case 348 and a magnetic resistance element 353 is mounted on one side of the magnet 342. The magnetic resistance element 353 is in contact with the inner surface of the case 348. An electric circuit part 354 is provided on another side of the magnet 342, and terminals 346 are mounted on the electric circuit part 354. The magnet 342, the magnetic resistance element 353, the electric circuit part 354 and the terminals 346 thereof form a sensor element part, which is contained in the case 348 to be covered by a first resin part 349a. The case 348 is provided in its opening end portion with a flange 348a and a cylindrical portion 348b. A second resin part 349b is formed to cover an opening portion of the case 348. A junction resin part 352, being prepared by urethane resin, is formed around the outer periphery of the cylindrical portion 348b. An output wire 347 is covered by the second resin part 349b through an output wire protective member 350. A bracket 351 is mounted around the outer periphery of the case 348.

In each of the embodiments as shown in Figs. 7, 8 and 9, the junction resin part is formed between the case and the second resin part, whereby the case is more completely prevented from infiltration of water through a clearance between the case and the second resin part.

The junction resin part is preferably prepared by a material which is molten by heat, such as thermoplastic resin. In molding of the second resin part, such a junction resin part may be molten or half-molten so that the case and the second resin part are adhered to each other, thereby to more completely seal the case.

Fig. 10 is a sectional view showing a rotation sensor 400 according to a ninth embodiment of the present invention. In the rotation sensor 400 as shown in Fig. 10, a sensor element part formed by a magnet 402, a coil 403, a magnetic pole 404 and a bobbin 405 is contained in a case 408. The case 408 is filled up with a first resin part 409a by molding, to a portion close to an opening portion 412.

Lower portions 406a of terminals are covered/protected by a first resin part 409a. A winding of the coil 403 is soldered to lower parts of upper portions 406b of the terminals 406. Forward end portions 413 of an output wire 407 are caulked/joined to upper parts thereof. Parts of the upper portions 406b of the terminals 406 upwardly extending from the first resin part 409a are covered by third resin parts 409c. The case 408 is joined with a mounting bracket 411 by brazing. The opening portion 412 of the case 408 is further integrally molded by a second resin part 409b. Through such molding, the case opening portion 412, an output wire protective member 410 and the bracket 411 are partially closely joined with the second resin part 409b respectively. Such close junction is attained by increasing pressure under a high temperature in molding of the second resin part 409b. In this embodiment, the first resin part 409a is prepared by epoxy resin having a low thermal expansion coefficient, and the third resin parts 409c are prepared by thixotropic epoxy resin being substantially identical in thermal expansion coefficient to that of the first resin part 409a. The second resin part 409b is prepared by fiberglass reinforced nylon resin. The output wire protective member 410 is prepared by urethane resin and the metal case 408 is prepared by stainless steel of SUS304, respectively.

Fig. 11 is a sectional view showing a magnetic sensor 420 according to a tenth embodiment of the present invention. In the magnetic sensor as shown in Fig. 11, a sensor element part formed by a magnetic resistance element 434, a magnet 422 and an electric circuit part 435 is contained in a case 428, and a first resin part 429a is molded to be integrated with lower portions of terminals connected with a sensor connecting portion. Forward end portions 433 of an output wire 427 are soldered to upper portions 426b of the terminals. The upper portions 426b of the terminals are covered by third resin parts 429c of thixotropic resin. An opening portion 432 of the case 428 is integrally molded by a second resin part 429b. An output wire protective member 430 is mounted on a part of an output wire 427, to be in contact with a second resin part 429b. A part of a bracket 431 provided around the outer periphery of the case 428 is also closely in contact with the second resin part 429b.

In each of the embodiments as shown in Figs. 10 and 11, the upper portions of the terminals are covered and protected by the third resin parts, whereby the connecting portions between the output wire and the terminals can be prevented from disconnection even if the second resin part is molded under high temperature/high pressure conditions.

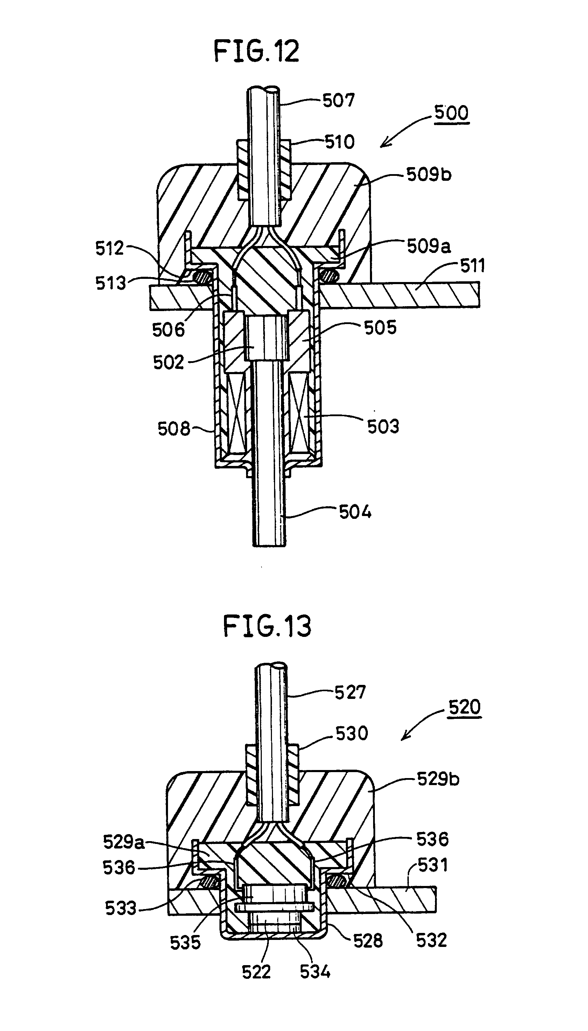

Fig. 12 is a sectional view showing a rotation sensor 500 according to an eleventh embodiment of the present invention. The rotation sensor 500 as shown in Fig. 12 has a magnet 502 and a magnetic pole 504 mounted on the same, which are provided in a bobbin 505. A coil 503 is provided around the bobbin 505, and terminals 506 are connected to both end portions of a windlng of the coil 503.

The magnet 502, the coil 503, the magnetic pole 504 and the bobbin 505 form a sensor element part, which is contained in a case 508. Forward end portions of an output wire 507 are connected to the terminals 506 of the sensor element part. Resin is filled in the case 508 by molding, to form a first resin part 509a. The first resin part 509a is adapted to cover the sensor element part and portions being close to the terminals 506, which serve as connecting portions between the sensor element part and the output wire 507. The first resin part 509a is prepared by epoxy resin having a low thermal expansion coefficient.

A flange 512 is formed on an opening side of the case 508 for receiving the sensor element part. The case 508 is inserted in a through hole of a bracket 511, and a ring 513 of rubber is engaged with an outer peripheral portion of the case 508 between the flange 512 and the bracket 511. This ring 513 is held between the flange 512 and the bracket 511 under pressure. In this state, resin is injection-molded to cover a clearance between the opening side of the case 508 and the bracket 511, thereby to form a second resin part 509b. The second resin part 509b is prepared by fiberglass reinforced nylon resin. An output wire protective member 510 is mounted around a portion of the output wire 507 being close to an end of a covered portion, so that a clearance between the output wire 507 and the second resin part 509b is sealed through the output wire protective member 510. The output wire protective member 510 is prepared by urethane resin. The case 508 is prepared by stainless steel of SUS304, and the ring 513 is prepared by EP rubber.

According to this embodiment, the second resin part 509b is formed on the opening side of the case 508, whereby no water infiltrates into the case 508 even if a clearance is defined between the first resin part 509a and the case 508 since the clearance is covered by the second resin part 509b. Thus, water/air tightness is improved.

Further, the ring 513 is held between the flange 512 and the bracket 511 under pressure, whereby the ring 513 is adhered to the flange 512 and the bracket 511 by its impact resilience. Therefore, even if a clearance is defined between the second resin part 509b and the bracket 511 or between the bracket 511 and the case 508 to allow infiltration of water or the like, further infiltration is prevented since the ring 513 is adhered to the flange 512 or the bracket 511, to ensure water/air tightness of the case 508.

Fig. 13 is a sectional view showing a magnetic sensor 520 according to a twelfth embodiment of the present invention. In the magnetic sensor 520 as shown in Fig. 13, a magnet 522 is provided in a case 528 and a magnetic resistance element 534 is mounted on one side of the magnet 522. The magnetic resistance element 534 is in contact with the inner surface of the case 528. An electric circuit part 535 is provided on another side of the magnet 522 and terminals 536 are mounted on the electric circuit part 535, while forward end portions of an output wire 527 are connected to the terminals 536.

A sensor element part formed by the magnet 522, the magnetic resistance element 534, the electric circuit part 535 and the terminals 536 thereof is contained in a case 528 and covered by a first resin part 529a. A flange 532 is formed on an opening side of the case 528. The case 528 is inserted in a through hole of a bracket 531, and a ring 533 of rubber is engaged with an outer peripheral portion of the case 528 between the flange 532 and the bracket 531. The ring 533 is held between the flange 532 and the bracket 511 under pressure, and a clearance between the opening side of the case 528 and the bracket 531 is covered by resin in this state, thereby to form a second resin part 529b. An output wire protective member 530 is mounted around an end portion of a covering wire for the output wire 527.

Also in this embodiment, the opening portion of the case 528 is covered by the second resin part 529b, so that no water or the like infiltrates into the case 528 even if a clearance is defined between the case 528 and the first resin part 529a. Further, the ring 533 is adhered to the flange 532 and the bracket 531 by its impact resilience. Thus, even if a clearance is defined between the second resin part 529b and the bracket 511 or between the bracket 511 and the case 528, infiltration of water through the clearance is prevented by the ring 533. The first resin part 529a, the second resin part 529b, the case 528 and the ring 533 are identical in material to those of the embodiment as shown in Fig. 12.

Although the present invention has been described and illustrated in detail, it is clearly understood that the same is by way of illustration and example only and is not to be taken by way of limitation, the scope of the present invention being limited only by the terms of the appended claims.

## Claims

1. A sensor for detecting variation in magnetic field, said sensor comprising:
a sensor element part (102, 103, 104; 122, 123, 124; 154, 155, 142; 202, 203, 204; 234, 235, 222; 302,303,304; 322, 323, 324; 353, 354, 342; 402, 403, 404; 434, 435, 422; 502, 503, 504; 522, 534, 535) having a terminal (106; 126; 156; 206; 226; 306; 326; 346; 406; 426; 506; 536) for detecting variation in magnetic field and generating a signal;
an output wire (107; 127; 147; 207; 227; 307; 327; 347; 407; 427; 507; 527) having an end connected to said terminal for outputting said signal from said sensor element part to the exterior;
a case (108; 128; 148; 208; 228; 308; 328; 348; 408; 428; 508; 528) having an opening (112; 132; 152; 212; 232; 412; 432) on a side towards said output wire, covering said sensor element part,
a first resin part (109a; 149a; 209a; 229a; 309a; 329a; 349a; 409a; 429a; 509a; 529a) filled in said case for covering said sensor element part;
**characterized by**
a second resin part (109b; 129b; 149b; 209b; 229b; 309b; 329c; 349b; 409b; 429b; 509b; 529b) molded in the vicinity of the opening in order to seal a clearance between said case and said first resin part by covering the opening of said case, and wherein
said first resin part is prepared by thermosetting resin and said second resin part is prepared by thermoplastic resin.

2. A sensor in accordance with claim 1, wherein
said first resin part covers a connecting portion (113; 133; 153) between said terminal and said output wire.

3. A sensor in accordance with claim 1 or 2, wherein
said thermosetting resin is epoxy resin and said thermoplastic resin is polyamide resin.

4. A sensor in accordance with claim 1, wherein
said second resin part covers a connecting portion (213; 233) between said terminal and said output wire.

5. A sensor in accordance with claim 1, further including a junction resin part (312; 332, 352) between said case, being filled up with said first resin part, and said second resin part.

6. A sensor in accordance with claim 5, wherein
said case is prepared by a metal and said junction resin part is prepared by thermoplastic

7. A sensor in accordance with claim 6, wherein
said thermoplastic resin is selected from urethane resin and polyamide resin.

8. A sensor in accordance with claim 5, wherein
said second resin part is prepared by polyamide resin.

9. A sensor in accordance with claim 1, further including a third resin part (409c; 429c) for covering a connecting portion between said output wire and said terminal after said first resin part is filled in said case.

10. A sensor in accordance with claim 9, wherein
said third resin part is prepared by thixotropic resin which is substantially identical in thermal expansion coefficient to that for said first resin part.

11. A sensor in accordance with claim 9, wherein
said first and third resin parts are prepared by thermosetting resin and said second resin part is prepared by thermoplastic resin.

## Patentansprüche

1. Sensor zur Feststellung von einer Änderung im magnetischen Feld, der folgende Teile umfasst:
ein Sensorelement (102, 103, 104; 122, 123, 124; 154, 155, 142; 202, 203, 204; 234, 235, 222; 302, 303, 304; 322, 323, 324; 353, 354, 342; 402, 403, 404; 434, 435, 422; 502, 503, 504; 522, 534, 535), das eine Anschlussklemme (106; 126; 156; 206; 226; 306; 326; 346; 406; 426; 506; 536) zur Messung von Schwankungen im Magnetfeld und zur Erzeugung eines Signals hat;
einen Ausgangsdraht (107; 127; 147; 207; 227; 307; 327; 347; 407; 427; 507; 527), dessen eines Ende mit der Anschlussklemme verbunden ist, die das Ausgangssignal vom Sensorelement nach außen leitet;
ein Gehäuse (108; 128; 148; 208; 228; 308; 328; 348; 408; 428; 508; 528), das eine Öffnung (112; 132; 152; 212; 232; 412; 432) an einer Seite in Richtung des Ausgangsdrahts hat, der das Sensorelement umgibt;
einen ersten Harzteil (109a; 149a; 209a; 229a; 309a; 329a; 349a; 409a; 429a; 509a; 529a), der in das Gehäuse eingefüllt wird, um das Sensorelement zu umgeben;
**gekennzeichnet durch**
einen zweiten Harzteil (109b; 129b; 149b; 209b; 229b; 309b; 329c; 349b; 409b; 429b; 509b; 529b), der der in der Nähe der Öffnung geformt ist, um eine Aussparung zwischen dem Gehäuse und dem ersten Harzteil **durch** das Umgeben der Öffnung des Gehäuses abzudichten, wobei
der erste Harzteil aus duroplastischem Harz und der zweite Harzteil aus thermoplastischem Harz hergestellt ist.

2. Sensor nach Anspruch 1, wobei der erste Harzteil einen Verbindungsbereich (113; 133; 153) zwischen der Anschlussklemme und dem Ausgangsdraht umgibt.

3. Sensor nach Anspruch 1 und 2, wobei das duroplastische Harz Epoxidharz und das thermoplastische Harz Polyamidharz ist.

4. Sensor nach Anspruch 1, wobei der zweite Harzteil einen Verbindungsbereich (213; 233) zwischen der Anschlussklemme und dem Ausgangsdraht umgibt.

5. Sensor nach Anspruch 1, der noch einen Verbindungsharzteil (312; 332; 352) zwischen dem Gehäuse, das mit dem ersten Harzteil ausgefüllt ist, und dem zweiten Harzteil enthält.

6. Sensor nach Anspruch 5, wobei das Gehäuse aus Metall und der Verbindungsharzbereich aus thermoplastischem Harz hergestellt sind.

7. Sensor nach Anspruch 6, wobei das thermoplastische Harz Urethanharz oder Polyamidharz ist.

8. Sensor nach Anspruch 5, wobei der zweite Harzteil aus Polyamidharz hergestellt ist.

9. Sensor nach Anspruch 1, der einen zusätzlichen dritten Harzteil (409c; 429c) einschließt, der nach Einfüllen des ersten Harzteils in das Gehäuse einen Verbindungsbereich zwischen dem Ausgangsdraht und der Anschlussklemme umgibt.

10. Sensor nach Anspruch 9, wobei der dritte Harzteil aus thixotropischem Harz hergestellt ist, das im Wesentlichen identisch im Wärmeausdehnungskoeffizienten mit dem des ersten Harzteils ist.

11. Sensor nach Anspruch 9, wobei der erste und dritte Harzteil aus einem duroplastischen Harz und der zweite Harzteil aus einem thermoplastischen Harz hergestellt sind.

## Revendications

1. Capteur pour la détection d'une variation dans un champ magnétique, ledit capteur comportant : un élément capteur **(102, 103, 104; 122,123,124; 154,155,142; 202, 203, 204; 234, 235, 222; 302,303,304; 322, 323, 324; 353,354,342; 402, 403, 404; 434,435,422; 502, 503, 504; 522,534,535)** comportant une borne **(106; 126; 156; 206; 226; 306; 326; 346; 406; 426; 506; 536)** pour détecter une variation dans un champ magnétique et pour générer un signal;
un fil de sortie **(107; 127; 147; 207; 227; 307; 327; 347; 407; 427; 507; 527**) ayant une extrémité connectée à ladite borne pour fournir, en sortie, ledit signal provenant dudit élément capteur vers l'extérieur;
un boîtier (**108; 128; 148; 208; 228; 308; 328; 348; 408; 428; 508; 528)** ayant une ouverture **(112; 132; 152; 212; 232; 412; 432)** située du côté dudit fil de sortie, recouvrant ledit élément capteur, une première partie en résine (**109a; 149a; 209a; 229a; 309a; 329a; 349a; 409a; 429a; 509a; 529a**) remplissant ledit boîtier destinée à envelopper ledit élément capteur **caractérisé par** une seconde partie en résine **(109b; 129b; 149b; 209b; 229b; 309b; 329c; 349b; 409b; 429b; 509b; 529b)** moulée près de l'ouverture afin de combler l'espace situé entre ledit boîtier et ladite première partie en résine, en recouvrant l'ouverture dudit boîtier, et dans lequel
ladite première partie en résine est réalisée avec de la résine thermodurcissable et ladite seconde partie en résine est réalisée avec de la résine thermoplastique.

2. Capteur selon la revendication 1, dans lequel
ladite première partie en résine recouvre une partie de connexion (**113; 133**; **153**) située entre ladite borne et ledit fil de sortie.

3. Capteur selon la revendication 1 ou 2, dans lequel
ladite résine thermodurcissable est une résine époxyde et ladite résine thermoplastique est une résine polyamide.

4. Capteur selon la revendication 1, dans lequel
ladite seconde partie en résine recouvre une partie de connexion **(213; 233)** située entre ladite borne et ledit fil de sortie.

5. Capteur selon la revendication 1, comportant en outre une partie en résine de jonction **(312;332;352)** située entre ledit boîtier, rempli par ladite première partie en résine, et ladite seconde partie en résine.

6. Capteur selon la revendication 5, dans lequel
ledit boîtier est réalisée dans un métal et ladite partie en résine de jonction est réalisée avec de la résine thermoplastique.

7. Capteur selon la revendication 6, dans lequel
ladite résine thermoplastique est choisie dans la résine uréthanne et la résine polyamide.

8. Capteur selon la revendication 5, dans lequel
ladite seconde partie en résine est réalisée avec de la résine polyamide.

9. Capteur selon la revendication 1, comportant en outre une troisième partie en résine (**409c; 429c**) destinée à recouvrir une partie de connexion située entre ledit fil de sortie et ladite borne après que ladite première partie en résine ait été déposée dans ledit boîtier.

10. Capteur selon la revendication 9, dans lequel
ladite troisième partie en résine est réalisée avec de la résine thixotropique dont le coefficient de dilatation thermique est sensiblement identique à celui de la première partie en résine.

11. Capteur selon la revendication 9, dans lequel
lesdites première et troisième parties en résine sont réalisées avec de la résine thermodurcissable et ladite seconde partie en résine est réalisée avec de la résine thermoplastique.
